Europäisches Patentamt

European Patent Office

Office européen des brevets

(19)

(11) **EP 0 743 775 B1**

(12) **FASCICULE DE BREVET EUROPEEN**

(45) Date de publication et mention
de la délivrance du brevet:
**14.01.1998 Bulletin 1998/03**

(51) Int Cl.⁶: **H04L 9/32**

(21) Numéro de dépôt: **96480053.6**

(22) Date de dépôt: **30.04.1996**

(54) **Procédé de signature numérique à connaissance nulle, permettant d'élaborer une signature résistant aux collisions**

Verfahren zur digitalen Unterschrift mit Null-Kenntnis, zum Herstellen von kollisionsresistenten Unterschriften

Method of zero-knowledge digital signatures, for creating a collision-resistant signature

(84) Etats contractants désignés:
**DE GB**

(30) Priorité: **17.05.1995 FR 9506259**

(43) Date de publication de la demande:
**20.11.1996 Bulletin 1996/47**

(73) Titulaires:
• **FRANCE TELECOM**
 **75015 Paris (FR)**
• **LA POSTE**
 **F-92777 Boulogne Billancourt Cédex (FR)**

(72) Inventeur: **Girault, Marc**
 **83000 Toulon (FR)**

(74) Mandataire: **Ballot, Paul Denis Jacques**
 **Cabinet Ballot-Schmit,**
 **9, boulevard de Strasbourg**
 **83000 Toulon (FR)**

(56) Documents cités:
• JOURNAL OF CRYPTOGRAPHY, vol. 4, 1991 (US), pages 161-174, XP 000574352 C.P.SCHNORR 'EFFICIENT SIGNATURE GENERATION BY SMART CARDS'
• ADVANCES IN CRYPTOLOGY - CRYPTO'88 PROCEEEDINGS, 21 - 25 Août 1988 SANTA BARBARA (US), pages 216-231, XP 000090654 L.C.GUILLOU & J.-J. QUISQUATER 'A "PARADOXICAL" IDENTITY-BASED SIGNATURE SCHEME RESULTING FROM ZERO-KNOWLEDGE'

## Description

La présente invention concerne le domaine de la signature numérique de messages au moyen de techniques cryptographiques.

La présente invention concerne plus particulièrement les procédés de signature numérique dits à clef publique et à connaissance nulle (zero-knowledge).

De tels procédés sont utilisés pour la sécurisation de la transmission d'informations numériques, et sont applicables à tout type de communication entre systèmes électroniques, appareillages et instruments nécessitant un certain niveau de sécurité.

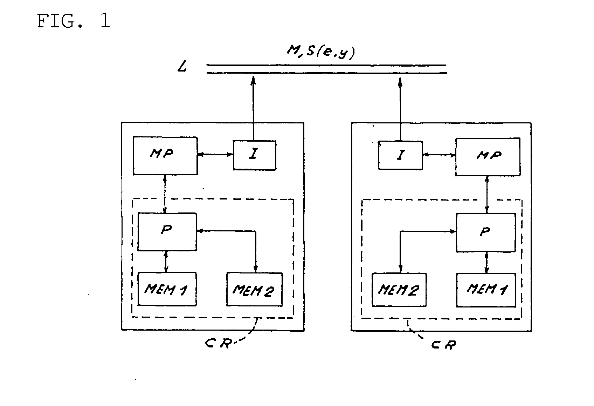

A titre d'exemple, la figure 1 représente deux systèmes électroniques A et B utilisant un procédé de signature numérique. Les systèmes A et B peuvent être des ordinateurs, des télécopieurs, des téléphones, une carte à puce et un système bancaire, etc. Ils communiquent par l'intermédiaire d'une ligne L et sont pourvus d'un microprocesseur MP, d'un circuit d'interface I pour accéder à la ligne L, par exemple un modem si L est une ligne téléphonique, et d'un bloc de calcul CR pour élaborer ou vérifier une signature numérique. Le bloc CR comprend un processeur arithmétique P, une mémoire de travail MEM1 de type RAM, et une mémoire programme MEM2 de type ROM, EPROM, ou EEPROM dans laquelle se trouvent enregistrés des algorithmes de cryptographie permettant au processeur P d'élaborer une signature ou de vérifier une signature reçue.

Le protocole suivi par A et B dans une procédure d'envoi d'un message $M$ est le suivant :

- le système qui émet le message $M$, par exemple A, joint au message une signature numérique $S$ d'authentification de l'origine du message, généralement d'une longueur de 200 à 1000 bits. La signature $S$ est un message crypté à deux paramètres $e$ et $y$ élaboré à partir d'un paramètre secret appelé clé secrète $s$. La signature S est de la forme :

$$(1) \qquad S = (e,y) \, ,$$

$e$ et $y$ étant les deux paramètres de la signature,

- le système B, qui reçoit le message $M$, vérifie la validité de la signature $S$ au moyen d'une équation dite de vérification nécessitant la connaissance d'un paramètre public du système signataire, appelé clé publique $C$.

De tels procédés d'élaboration/vérification de signatures numériques sont dits « à connaissance nulle » car il est en principe impossible pour B de retrouver la clé secrète $s$ de A, à partir de sa signature $S$ et de la clé publique $C$.

Parmi les procédés les plus représentatifs de l'état de la technique, on peut citer :

- un procédé de L.C. GUILLOU et J.J. QUISQUATER, décrit dans l'article « A paradoxical identity-based signature scheme resulting from zero-knowledge », Advances of Cryptology, Proceedings of CRYPTO 88, Lecture Notes in Computer Science, Vol. 403, pages 216-231, Springer-Verlag, Berlin, 1990,
- un procédé de C.P. SCHNORR décrit dans l'article « Efficient identification and signature for smart cards », Advances of Cryptolcgy, Proceedings of CRYPTO 89, Lecture Notes in Computer Science, Vol. 435, pages 239-252, Springer-Verlag, Berlin, 1990,

  - un procédé de M. GIRAULT, auteur de la présente invention, décrit dans la demande de brevet français N° 94 01271 du 04.02.1994 au nom de la demanderesse (FR-A-2 716 058 publiée le 11.8.95).

De façon générale, ces procédés reposent sur l'utilisation de fonctions dites « de hachage » dont une définition détaillée est donnée par la norme ISO/IEC 10118 éditée en 1994 par l'Organisation Internationale de Normalisation (ISO) et la Commission Internationale d'Electrotechnique (IEC). De plus, un Registre des Algorithmes de Cryptographie (RCA) institué par la norme ISO/IEC 9979, met à la disposition de l'homme du métier un certain nombre d'algorithmes de cryptographie conventionnels permettant de réaliser des fonctions de hachage.

On rappellera en relation avec la norme précitée quelques notions fondamentales concernant les fonctions de hachage, les termes figurant ci-après en langue anglaise et entre parenthèses étant des termes officiellement utilisés. Une fonction de hachage (hash-function) est un algorithme de calcul qui transforme une valeur d'entrée se présentant sous la forme d'une chaîne de caractères binaires (data-string) de longueur quelconque, en une valeur de sortie, ou code de hachage (hash-code), se présentant sous la forme d'une chaîne binaire d'une longueur déterminée de $k$ bits. Une fonction de hachage à sens unique (one-way hash function) est une fonction de hachage qui délivre un code de hachage à partir duquel il est en principe impossible de retrouver une des valeurs d'entrée ayant pu conduire à ce code de hachage. Enfin, une fonction de hachage résistant aux collisions (collision-resistant hash-function) est une fonction de hachage avec laquelle il est en principe impossible de trouver deux valeurs d'entrée distinctes conduisant à la même valeur de sortie, c'est-à-dire au même code de hachage.

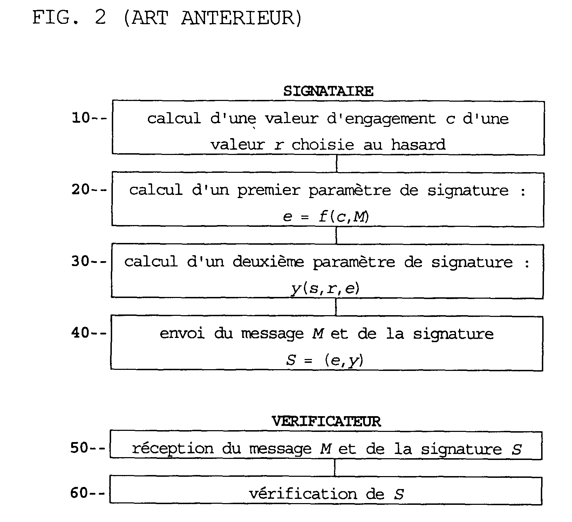

Ces notions étant rappelées, on décira maintenant d'une manière générale et en relation avec la figure 2 les procédés de signature numérique à connaissance nulle classiques. La figure 2 est un organigramme qui représente les étapes classiques d'élaboration et de vérification d'une signature numérique. Le terme « signataire » désigne le système qui émet un message signé (par exemple le système A de la figure 1) et le terme « vérificateur » le système qui reçoit le message et vérifie la validité de la signature (par exemple le système B). On distingue les étapes suivantes :

**étape 10 :** le signataire calcule une valeur $c$ à partir d'une valeur $r$ aléatoire (choisie au hasard). En cryptographie, $c$ est appelé valeur d'engagement de r dans la signature, car c est une valeur qui masque la valeur $r$, c'est-à-dire qui la dissimule. La méthode permettant de calculer c est propre à chaque procédé (par exemple GUILLOU-QUISQUATER, SCHNORR,...) et ne sera donc pas décrite ici.

**étape 20 :** le signataire calcule le premier paramètre $e$ de la signature au moyen d'une fonction de hachage $f$ de $k$ bits selon la relation :

$$(2) \qquad e = f(c,M)$$

Le paramètre $e$ est ainsi un code de hachage d'une longueur $k$ (c'est-à-dire comprenant $k$ bits), calculé à partir du message $M$ et de la valeur d'engagement $c$.

**étape 30** : le signataire calcule le deuxième paramètre $y$ ($y(s, r, e)$) de la signature, à partir de sa clé secrète $s$, de la valeur aléatoire $r$ et du premier paramètre $e$. La méthode de calcul permettant de déterminer $y$ est propre à chaque procédé et ne sera donc pas décrite, mais on peut remarquer que de façon classique le deuxième paramètre $y$ est fonction du premier paramètre $e$.

**étape 40** : le signataire envoie le message $M$ et la signature $S = (e,y)$.

**étape 50 :** le vérificateur reçoit le message $M$ accompagné de la signature $S$.

**étape 60 :** le vérificateur contrôle la validité de la signature $S$. Cette opération consiste généralement à recalculer la valeur du paramètre $e$ au moyen de l'équation de vérification et de la clé publique $C$ déjà évoquées, puis à s'assurer que la valeur recalculée est identique à la valeur présente dans la signature S.

De façon classique, dans les procédés de signature à connaissance nulle du type qui vient d'être décrit, la fonction de hachage $f$ produisant le premier paramètre $e$ (relation (2), étape 20) est choisie à sens unique afin de verrouiller la signature et éviter que des tiers puissent produire des signatures valides en se substituant frauduleusement au signataire légitime. La fonction de hachage $f$ est en outre choisie de manière à satisfaire deux impératifs pratiques contradictoires :

- d'une part, le nombre de bits $k$ du code de hachage $e$ doit être suffisamment grand pour garantir l'inviolabilité de la signature, l'inviolabilité de la signature dépendant de la complexité de la fonction de hachage $f$ et la complexité de la fonction de hachage $f$ de la longueur du code de hachage $e$,
- d'autre part, $k$ doit être suffisamment petit pour la longueur de la signature $S$ demeure dans des proportions raisonnables, les étapes d'élaboration, de transmission et de vérification de la signature devant être réalisées dans des temps assez brefs.

Ainsi, dans la pratique, il est admis qu'un degré de sécurité suffisant est atteint avec une fonction de hachage à sens unique $f$ produisant un code de hachage $e$ d'une longueur inférieure à la centaine de bits, et plus précisément de 64 bits ($k = 64$) dans le cas des procédés SCHNORR et GUILLOU-QUISQUATER.

Les procédés de signature classiques apportent donc entière satisfaction en ce qu'ils offrent un niveau de sécurité élevé contre des attaques extérieures provenant de tiers ne connaissant pas la clé secrète, tout en présentant l'avantage de produire des signatures d'une longueur raisonnable.

Par ailleurs, la probabilité qu'une collision entre signatures se produise (c'est-à-dire que deux signatures identiques soient émises pour deux messages différents), est considérée dans l'état de la technique comme suffisamment faible pour satisfaire les besoins de la pratique.

Toutefois, malgré cette faible probabilité de collision, la demanderesse s'est aperçue qu'il demeure possible pour un utilisateur animé d'une intention frauduleuse de créer volontairement une collision de signatures, en effectuant une recherche systématique de messages jusqu'à trouver deux messages ayant la même signature. Des études ont montré qu'une telle recherche volontaire de collisions n'a rien d'hypothétique ou de théorique, puisqu'elle peut être menée à bien avec des moyens de calcul d'une puissance qui n'est pas, de nos jours, irréaliste. Cela est particulièrement gênant dans la mesure où les signatures numériques ont la vocation de devenir d'ici quelques années des moyens de preuve légaux qui devraient permettre de régler certaines situations litigieuses. A titre d'exemple, on considérera le cas d'un échange d'informations par télécopie, où les systèmes A et B de la figure 1 sont des télécopieurs, et où A envoie à B un message $M$ correspondant à l'image numérisée d'un document, accompagné d'une signature $S$. On considérera ensuite que B, après avoir vérifié la signature et imprimé le document, efface l'image numérique de sa mémoire et ne conserve que la signature $S$, alors que A, de capacité mémoire supérieure au télécopieur B, conserve en mémoire le message M (le document) et la signature $S$. Si, par la suite, la preuve de l'envoi du document doit être rapportée, il est important que la signature conservée par B puisse permettre de retrouver dans A le message qui a été transmis, et que toute confiance puisse être portée au binôme signature/message présent dans la machine A. Toutefois, si l'utilisateur du télécopieur A peut trouver un message différent de même signature qui lui est plus favorable, il est en mesure de fausser la preuve remplaçant à l'intérieur de la machine A le message originel par le nouveau message accompagné de la même signature.

Pour éviter ce genre de fraude, il est donc indispensable d'empêcher qu'un utilisateur puisse trouver deux messages différents ayant des signatures identiques.

Une solution à la portée de l'homme du métier serait de réaliser la relation (2) de l'étape 20 décrite ci-dessus au moyen d'une fonction de hachage $f$ résistant aux collisions, au lieu d'utiliser une fonction de hachage à sens unique. Le paramètre $e$ présenterait alors l'avantage d'être résistant aux collisions, mais cela aurait l'effet négatif d'augmenter la taille de la signature, étant donné qu'une fonction résistant aux collisions nécessite généralement la production d'un code de hachage d'une longueur double de la longueur d'un code produit par une fonction à sens unique (on se référera notamment à la norme ISO/IEC 10118, partie 2, Annexe A). En particulier, une telle solution conduirait à un paramètre $e$ d'une longueur minimum de 128 bits dans le cas des procédés SCHNORR et GUILLOU-QUISQUATER.

Ainsi, un objet général de la présente invention est de prévoir un procédé de signature numérique à connaissance nulle permettant d'élaborer une signature numérique résistant aux collisions.

Un objet plus particulier de la présente invention est de prévoir un procédé qui permette d'élaborer une signature numérique résistant aux collisions sans augmentation significative de la taille de la signature.

Encore un autre objet de la présente invention est d'atteindre ce résultat de façon simple, en modifiant les procédés classiques de signature à connaissance nulle sans diminuer la sécurité offerte par ces procédés.

Pour atteindre ces objets, la présente invention se base tout d'abord sur la constatation que, dans une signature classique $S(e,y)$, le deuxième paramètre $y$ est directement fonction du premier paramètre $e$, de sorte qu'une collision sur $e$ entraîne obligatoirement une collision sur $y$ et une collision sur l'ensemble de la signature $S$. Ainsi, une première idée de la présente invention est de « briser » la liaison fonctionnelle qui existe entre $e$ et $y$. Pour rendre la signature résistante aux collisions, une autre idée de la présente invention est de briser la liaison fonctionnelle entre $e$ et $y$ en transformant au moins l'un de ces deux paramètres en un nouveau paramètre $e'$ ou $y'$ obtenu par combinaison du paramètre $e$ ou $y$ originel avec un troisième paramètre dépendant du message $M$ à signer. Enfin, encore une autre idée de la présente invention est de réaliser une telle transformation au moyen d'une fonction réversible, afin que le vérificateur, à la réception de la signature, puisse retrouver aisément le paramètre $e$ ou $y$ originel et vérifier de façon conventionnelle la validité de la signature.

Plus particulièrement, la présente invention prévoit un procédé pour élaborer une signature numérique résistant aux collisions, la signature étant destinée à accompagner un message à signer, comprenant des étapes d'élaboration d'un premier et d'un deuxième paramètres de signature, une étape d'élaboration d'un troisième paramètre dépendant du message à signer, et une étape de transformation d'au moins l'un des premier et deuxième paramètres de signature en un nouveau paramètre de signature, consistant à combiner, au moyen d'une fonction réversible, le paramètre à transformer et le troisième paramètre.

Avantageusement, le troisième paramètre est choisi de longueur inférieure ou de même longueur que le premier ou second paramètre avec lequel il est combiné.

Selon un premier mode de réalisation, le premier paramètre est un code de hachage délivré par une première fonction de hachage à sens unique recevant en entrée une valeur d'engagement d'une valeur aléatoire et le message à signer, le deuxième paramètre est déterminé à partir du premier paramètre, d'une clé secrète et de la valeur aléatoire, le troisième paramètre est un code de hachage délivré par une deuxième fonction de hachage à sens unique recevant en entrée le message à signer.

Avantageusement, les première et deuxième fonctions de hachage sont identiques.

Selon un deuxième mode de réalisation, le premier paramètre est délivré par une fonction recevant en entrée une valeur d'engagement d'une valeur aléatoire et une fraction d'un code de hachage délivré par une fonction de hachage résistant aux collisions recevant en entrée le message à signer, le deuxième paramètre est déterminé à partir du premier paramètre, d'une clé secrète et de la valeur aléatoire, le troisième paramètre est une autre fraction du code de hachage délivré par la fonction de hachage résistant aux collisions recevant en entrée le message à signer.

Selon une première variante de réalisation, la fonction délivrant le premier paramètre est une fonction de hachage à sens unique.

Selon une deuxième variante de réalisation, la fonction délivrant le premier paramètre est la fonction OU EXCLUSIF calculée bit à bit.

Avantageusement, la fonction réversible est la fonction logique OU EXCLUSIF calculée bit à bit.

Dans le procédé de l'invention, les étapes d'élaboration du premier et du deuxième paramètres de signature peuvent être réalisées selon le procédé de GUILLOU et QUISQUATER, ou selon le procédé de SCHNORR.

La présente invention concerne également un procédé de vérification de la validité d'une signature numérique élaborée selon le procédé qui vient d'être décrit, comprenant une étape d'élaboration du troisième paramètre dépendant du message à signer, une étape consistant à ramener à sa valeur originelle le nouveau paramètre de signature en combinant au moyen de la fonction inverse de la fonction réversible le nouveau paramètre et le troisième paramètre.

Ces objets, caractéristiques et avantages ainsi que d'autres de la présente invention apparaîtront plus clairement à la lecture de la description suivante de deux modes de réalisation du procédé de la présente invention et d'exemples d'applications de ces deux modes de réalisation à des signatures de type SCHNORR et GUILLOU-QUISQUATER, en relation avec les figures jointes parmi lesquelles :

la figure 1 représente schématiquement deux systèmes électroniques auxquels peut s'appliquer le procédé de la présente invention, et a été décrite précédemment,

la figure 2 est un organigramme représentant un procédé classique de signature numérique à connaissance nulle, et a été décrite précédemment,

la figure 3 est un organigramme représentant un premier mode de réalisation d'un procédé de signature numérique à connaissance nulle selon l'invention, et

la figure 4 est un organigramme représentant un deuxième mode de réalisation d'un procédé de signature numérique selon l'invention.

**Premier mode de réalisation de l'invention**

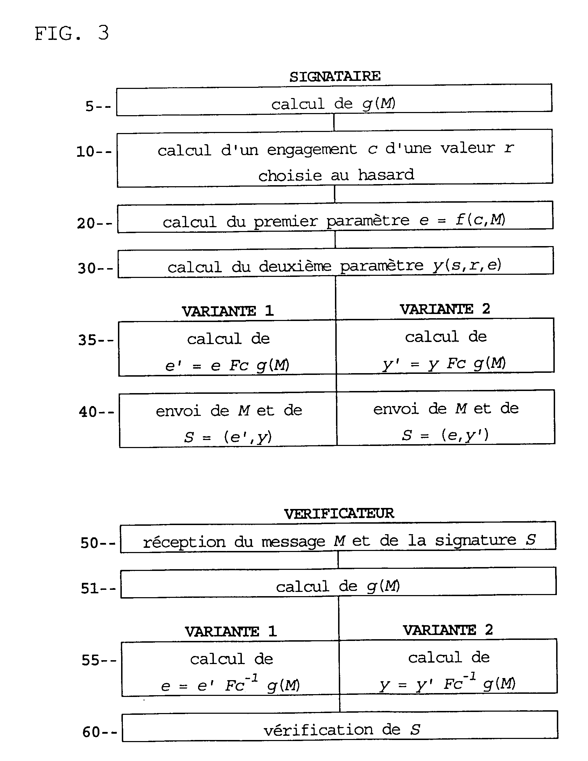

La figure 3 représente les étapes d'un procédé selon la présente invention, certaines étapes étant déclinées en deux variantes. Les références utilisées pour désigner les étapes du procédé sont celles de la figure 2 pour les étapes classiques, et sont des références intercalaires pour les étapes rajoutées par la présente invention. Le procédé de la figure 3 est susceptible d'être mis en oeuvre par toute machine de structure classique utilisant déjà un procédé de signature numérique, par exemple les systèmes électroniques A et B de la figure 1.

On distingue les opérations réalisées par le signataire, par exemple le système A, et les opérations réalisées par le vérificateur, par exemple le système B.

**Opérations réalisées par le signataire**

**étape 5** : calcul de $g(M)$
Cette étape consiste à calculer un paramètre dépendant du message $M$ à émettre. Selon le présent mode de réalisation de l'invention, ce paramètre est un code de hachage $g(M)$ calculé au moyen d'une fonction de hachage $g$ à sens unique recevant en entrée le message $M$.

**étape 10** : calcul d'un engagement $c$ d'une valeur $r$ choisie au hasard.

**étape 20** : calcul du premier paramètre $e$ de la signature :

$$e = f(c,M)$$

**étape 30** : calcul du deuxième paramètre $y(s,r,e)$ de la signature, à partir de la clé secrète $s$, de la valeur aléatoire $r$ et du paramètre $e$.

Ces trois étapes 10, 20, 30 sont classiques et ont déjà été décrites au préambule.

**étape 35/variante 1** : calcul de $e' = e \, Fc \, g(M)$
**/variante 2 :** calcul de $y' = y \, Fc \, g(M)$

Cette étape est déclinée en deux variantes. Il s'agit ici de combiner au moins l'un des paramètres $e$ ou $y$ de la signature avec le paramètre $g(M)$ dépendant du message $M$, au moyen d'une fonction de combinaison réversible $Fc$, afin d'obtenir un nouveau paramètre $e'$ ou $y'$ de signature.

**étape 40/variante 1** : envoi de $M$ et de $S = (e',y)$
**/variante 2** : envoi de $M$ et de $S = (e,y')$

Cette étape est en elle-même classique mais se distingue de l'art antérieur en ce que la signature $S$ comprend au moins un des deux paramètres modifiés $e'$ ou $y'$ dépendant du message $M$ et n'ayant plus de lien fonctionnel direct avec l'autre paramètre $y$ ou $e$.

**Opérations réalisées par le vérificateur**

**étape 50** : réception du message $M$ et de la signature $S$
**étape 51** : calcul de $g(M)$

Cette étape 51 de calcul du paramètre $g(M)$ permet de préparer l'étape suivante 55.

**étape 55/variante 1 :** calcul de $e = e'$ $Fc^{-1}$ $g(M)$
**/variante 2** : calcul de $y = y'$ $Fc^{-1}$ $g(M)$

Cette étape permet au vérificateur de retrouver le paramètre originel $e$ ou $y$, grâce à la propriété de réversibilité de la fonction de combinaison $Fc$, dont la fonction inverse est $Fc^{-1}$.

**étape 60** : vérification de $S$.

Cette dernière étape est classique et consiste à vérifier la validité de $e$, à partir de $y$, la clé publique $C$ et l'équation de vérification déjà mentionnées au préambule.

Une troisième variante qui n'a pas été représentée en figure 3 consiste à transformer à la fois $e$ en $e'$ et $y$ en $y'$. Cette troisième variante peut être réalisée en combinant $e$ et $y$ à $g(M)$ (dans ce cas le procédé de l'invention comprend la somme des opérations de la variante 1 et de la variante 2), ou en combinant $e$ à une première fraction $g1$ de g(M) et $y$ à une deuxième fraction g2 de g(M), le terme « fraction » étant compris au sens large comme cela sera expliqué plus loin en relation avec le deuxième mode de réalisation de la présente invention.

Dans le mode de réalisation qui vient d'être décrit, la fonction $g$ peut être choisie quelconque et par exemple égale à la fonction $f$ classique utilisée à l'étape 20 pour calculer le premier paramètre $e$ de la signature. Dans un souci de sécurité, on pourra s'assurer qu'il n'existe aucun risque de collision simultanée entre $g$ et $f$, c'est-à-dire qu'il ne peut exister deux messages distincts $M1$, $M2$ pouvant simultanément produire les collisions suivantes :

$$g(M1) = g(M2),$$

et

$$f(c,M1) = f(c,M2)$$

Toutefois, dans la pratique, même si $g$ est choisie égale à $f$, un tel cas de double collision ne doit pas se produire pas si l'on applique la fonction $f$ au paramètres $c$ et $M$ selon l'ordre de hachage conventionnel $c,M$ (et non pas $M,c$).

Les avantages de la présente invention apparaissent maintenant clairement. Considérons deux signatures de l'art antérieur $S1$, $S2$ relatives à deux messages $M1$, $M2$ :

$$S1 = (e1,y1) \; ; S2 = (e2,y2)$$

Trois possibilités de transformation de ces signatures sont offertes, correspondant aux trois variantes de la présente invention :

a) transformer $S1$ en $S1'(e1',y1)$, $e1'$ étant égal à $f(c,M1)$ $Fc$ $g(M1)$, et transformer $S2$ en $S2'(e2',y2)$, $e2'$ étant égal à $f(c,M2)$ $Fc$ $g(M2)$,
b) transformer $S1$ en $S1'(e1,y1')$, $y1'$ étant égal à $y1$ $Fc$ $g(M1)$, et transformer $S2$ en $S2'(e2,y2')$, $y2'$ étant égal à $y2$ $Fc$ $g(M2)$,
c) transformer $S1$ en $S1'(e1',y1')$ et $S2$ en $S2'(e2',y2')$.

Considérons ensuite deux cas possibles de collisions :
**Collision sur $f$ : $f(c,M1) = f(c,M2)$**

Dans ce cas $e1 = e2 = f(c,M1) = f(c,M2)$ d'une part, et $y1 = y2$ d'autre part. La collision s'étend aux deux signatures classiques $S1$ et $S2$, qui prennent la forme de deux chaînes binaires identiques. Par contre, grâce à la présente invention, et quelle que soit la variante a), b) ou c) choisie, il ne peut y avoir de collision entre les signatures $S1'$ et $S2'$ puisque la fonction $g$ et la fonction $f$ ne peuvent être simultanément en collision.

**Collision sur $g$ : $g(M1) = g(M2)$**

Dans ce cas, il ne peut pas non plus y avoir de collision entre les signatures $S1'$ et $S2'$ selon l'invention puisque $g$ et $f$ ne peuvent être simultanément en collision.

En définitive, on voit que la présente invention apporte une solution simple pour élaborer une signature $S$ résistant aux collisions sans nécessiter l'emploi d'une fonction de hachage $f$ résistant aux collisions.

De préférence, la fonction $g$ est choisie de manière que le troisième paramètre $g(M)$ soit d'une longueur inférieure ou égale à celle du paramètre $e$ ou $y$ avec lequel il est combiné. Dans ces conditions, le paramètre modifié $e'$ ou $y'$ présente sensiblement la même longueur que $e$ ou $y$, ce qui constitue un autre avantage de la présente invention.

Par ailleurs, on peut choisir comme fonction de combinaison $Fc$ la fonction OU EXCLUSIF calculée bit à bit, dont la fonction inverse est également la fonction OU EXCLUSIF. Dans ce cas, le paramètre modifié $e'$ ou $y'$ présente exactement la même longueur que $e$ ou $y$. Si $g(M)$ est d'une longueur inférieure à celle du paramètre à modifier $e$ ou $y$, on peut utiliser pour combiner g(M) au paramètre à modifier une méthode classique dite « de remplissage » (padding method), de préférence la première méthode décrite en annexe B de la norme ISO/IEC 10118-1.

Egalement, et comme on le verra plus loin, la fonction $Fc$ peut être une fonction arithmétique. Dans ce cas, des méthodes classiques de troncature pourront être utilisées pour que e' ou $y'$ présentent la même longueur que le paramètre originel.

### Deuxième mode de réalisation de l'invention

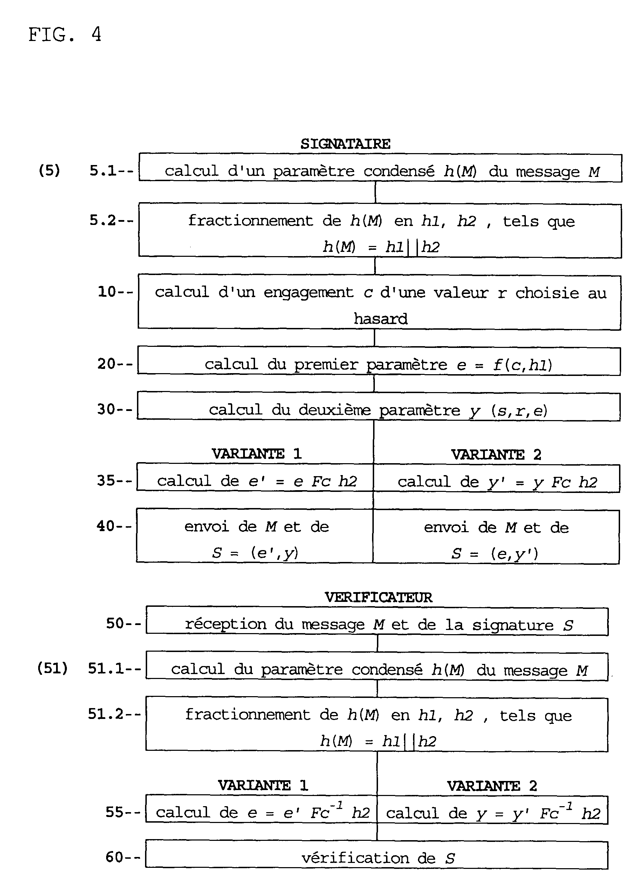

On décrira maintenant en relation avec la figure 4 un deuxième mode de réalisation du procédé de l'invention, dans lequel le message $M$ est préalablement condensé (c'est-à-dire compressé, ou raccourci) par une fonction de hachage $h$ résistant aux collisions. On vise ici une application de l'invention à certaines techniques de transfert de messages où une condensation des messages est réalisée systématiquement. Les références utilisées pour désigner les étapes du procédé sont celles de la figure 2 pour les étapes classiques, et on conservera pour désigner les étapes relevant de la présente invention les références intercalaires déjà utilisées en figure 3, afin de faire ressortir les équivalences entre les deux modes de réalisation.

### Opérations réalisées par le signataire

**étape 5** : selon ce mode de réalisation, l'étape 5 de calcul d'un paramètre dépendant du message $M$ comprend deux sous-étapes référencées 5.1 et 5.2.

**étape 5.1** : calcul d'un paramètre condensé $h(M)$ du message $M$, $h$ étant la fonction de condensation précitée.

Comme on l'a indiqué, cette étape de condensation ne découle pas obligatoirement de l'invention mais peut exister pour d'autres raisons.

**étape 5.2** : fractionnement de $h(M)$ en deux paramètres $h1$, $h2$, de préférence de même longueur, et tels que $h(M) = h1\|h2$, « $\|$ » étant le symbole de la concaténation. Comme on le verra plus loin, l'un des deux paramètres $h1$ ou $h2$ (au choix) sera utilisé à l'étape 20 pour le calcul du paramètre $e$ selon la relation (2), et l'autre paramètre $h2$ ou $h1$ à l'étape 35 pour transformer au moins l'un des deux paramètres $e$, $y$ de la signature en un nouveau paramètre $e'$ ou $y'$.

**étape 10** : calcul d'un engagement $c$ d'une valeur $r$ choisie au hasard.

**étape 20** : calcul du premier paramètre $e = f(c,h1)$.

Par comparaison avec l'état de la technique, on voit ici que $h1$ remplace $M$ pour le calcul de $e$.

**étape 30** : calcul du deuxième paramètre $y$ en fonction de la clé secrète $s$, du nombre $r$, et du paramètre $e$.

**étape 35/variante 1** : calcul de $e' = e\ Fc\ h2$,

**/variante 2** : calcul de $y' = y\ Fc\ h2$.

Au cours de cette étape, déclinée en deux variantes, le signataire combine $e$ ou $y$ avec un paramètre dépendant du message $M$, $Fc$ désignant comme précédemment une fonction de combinaison réversible, par exemple une opération logique bit à bit comme le OU EXCLUSIF, ou une opération arithmétique. Ici, le paramètre dépendant du message $M$ est $h2$, l'un des deux termes résultant du fractionnement de $h(M)$. De préférence, le fractionnement de $h(M)$ est réalisé de manière que *h2* soit de longueur inférieure ou de même longueur que le paramètre *e* ou *y*.

> **étape 40/variante 1** : envoi de *M* et de $S = (e', y)$
>   **/variante 2** : envoi de *M* et de $S = (e, y')$

**Opérations réalisées par le vérificateur**

> **étape 50** : réception du message *M* et de la signature *S*,
> **étape 51** : à ce stade du procédé, avant de retrouver le paramètre originel *e* ou *y*, le vérificateur doit calculer le paramètre *h(M)* résultant de la condensation du message *M,* puis les fractions *h1* et *h2*. Ainsi l'étape 51 comprend les sous-étapes suivantes :
> **étape 51.1** : calcul du paramètre condensé *h(M)* du message *M*
> **étape 51.2** : fractionnement de *h(M)* en *h1, h2* , tels que

$$h(M) = h1 \| h2$$

> **étape 55/variante 1** : calcul de $e = e' \, Fc^{-1} \, h2,$
>   **/variante 2** : calcul de $y = y' \, Fc^{-1} \, h2.$

Comme dans le cas du mode de réalisation de la figure 3, cette étape consiste à retrouver grâce à la propriété de réversibilité de la fonction de combinaison *Fc* le paramètre originel *e* ou *y* qui a été transformé. Une fois *e* ou *y* retrouvé, l'étape de vérification classique peut être réalisée :

> **étape 60** : vérification de *S*

L'homme du métier notera que dans ce deuxième mode de réalisation, il n'est pas nécessaire que la fonction *f* de l'étape 20 soit une fonction de hachage à sens unique, étant donné que l'on injecte déjà dans la signature le paramètre *h1* qui est issu d'une fonction de hachage résistant aux collisions. Ainsi, on pourra par exemple choisir comme fonction *f* la fonction OU EXCLUSIF.

De plus, il apparaîtra clairement à l'homme du métier que ce deuxième mode de réalisation de l'invention est susceptible de nombreuses variantes de réalisation. En particulier, le terme « fractionnement » doit être compris au sens large, non pas comme désignant uniquement une opération de troncature, c'est-à-dire de coupure d'une chaîne binaire en deux demi chaînes binaires, mais comme désignant toute opération portant sur *h(M)* permettant d'obtenir les deux paramètres *h1* et *h2*. Par exemple, *h1* et *h2* pourraient résulter de l'application à *h(M)* de deux fonctions distinctes *f1* et *f2,* comme suit :

$$h1 = f1(h(M)),$$

et

$$h2 = f2(h(M)),$$

à la condition que toute modification de *h(M),* même une modification d'un seul bit, entraîne une modification de *h1* et/ou *h2* (bien entendu, la présente remarque est applicable au fractionnement de *g(M)* en *g1* et *g2* décrit plus haut en relation avec le premier mode de réalisation de l'invention).

Enfin, les deux variantes peuvent être combinées : on peut transformer simultanément *e* en *e'* et *y* en *y'*.

On a décrit jusqu'à présent le procédé de l'invention sans détailler les étapes 10, 30 et 60. En effet, le procédé de l'invention est applicable à tout type de signature numérique selon l'art antérieur et les étapes 10, 30 et 60 sont spécifiques à chaque procédé. Les étapes 10, 30 et 60 seront maintenant détaillées dans la description suivante d'exemples d'application de l'invention à une signature selon le modèle de SCHNORR et à une signature selon le modèle de GUILLOU-QUISQUATER.

**Application de l'invention à une signature numérique selon SCHNORR**

Le procédé de signature présenté par C.P. SCHNORR à la conférence CRYPTO 89 (voir références au préambule) est basé sur la difficulté de calculer des logarithmes discrets. Les paramètres universels, c'est-à-dire partagés par tous les utilisateurs (par exemple A et B de la figure 1), sont :

- un grand nombre premier $p$, d'une longueur recommandée d'au moins 512 bits,
- un nombre premier $q$ qui divise $p$, d'une longueur minimale recommandée de 140 bits,
- un entier $B$ appelé Base, répondant à l'égalité $B^q = 1$ (modulo $p$) (ce qui signifie : le reste de la division par $p$ de $B$ à la puissance $q$ est égal à 1)
- une fonction $t$, typiquement la fonction identité, une fonction à sens unique ou une fonction de troncature,

Par ailleurs, la clé secrète $s$ d'un utilisateur est un entier choisi dans l'ensemble de valeurs $\{1...q\}$.

Enfin, la clé publique $C$ (connue de tous les utilisateurs) est telle que $B^sC = 1$ (modulo $p$) (soit : le reste de la division par $p$ de $B$ à la puissance $s$ multiplié par C est égal à 1)

**Application du premier mode de réalisation de l'invention**

Le tableau 1 ci-après décrit les opérations à effectuer lorsque l'on applique le premier mode de réalisation de l'invention au modèle de SCHNORR. Ici, on a choisi de réaliser la fonction réversible $Fc$ au moyen de la fonction OU EXCLUSIF ($\oplus$). Par ailleurs, $x$ est une variable intermédiaire permettant de calculer le paramètre $c$ d'engagement de la valeur aléatoire $r$.

Dans ce tableau, au lieu de la fonction OU EXCLUSIF $\oplus$, une variante de réalisation consiste à utiliser comme fonction réversible $Fc$ l'opération addition modulo $q$, soit:

**étape 35/variante 1** : calcul de $e' = e + g(M)$ (modulo $q$),
**étape 35/variante 2** : calcul de $y' = y + g(M)$ (modulo $q$),
**étape 55/variante 1** : calcul de $e = e' - g(M)$ (modulo $q$),
**étape 55/variante 2** : calcul de $y = y' - g(M)$ (modulo $q$).

Il s'agit alors d'une opération arithmétique (et non d'une opération logique bit à bit comme dans le cas de la fonction logique OU EXCLUSIF) qui peut entraîner une augmentation de 1 bit du paramètre $e'$, mais une telle augmentation est insignifiante. De plus, on peut prévoir une troncature (coupure) de ce bit supplémentaire si l'on souhaite rester exactement dans le même gabarit que $e$.

Bien entendu, les fonctions $f$, $g$ et $t$ sont des fonctions de hachages publiques, détenues par tous les utilisateurs.

Par ailleurs, on voit grâce à cet exemple d'application que la vérification de la signature (étape 60) consiste effectivement à recalculer $e$ et vérifier que la valeur recalculée est égale à la valeur de $e$ présente dans la signature $S$ ($e$ reçu).

Enfin, et comme on l'a déjà indiqué plus haut, les variantes 1 et 2 peuvent être combinées.

**Application du deuxième mode de réalisation de l'invention**

Le tableau 2 ci-après décrit les opérations qui résultent de l'application du deuxième mode de réalisation de l'invention au modèle de SCHNORR.

A l'étape 35, il est également possible d'utiliser comme fonction réversible $Fc$ l'addition modulo $q$, soit :

**étape 35/variante 1** : calcul de $e' = e + h2$ (modulo $q$)
**étape 35/variante 2** : calcul de $y' = y + h2$ (modulo $q$)
**étape 55/variante 1** : calcul de $e = e' - h2$ (modulo $q$),
**étape 55/variante 2** : calcul de $y = y' - h2$ (modulo $q$).

Bien entendu, $f$, $t$ et $h$ sont connues de tous les utilisateurs, ainsi que la règle de fractionnement de $h(M)$ en $h1$ et $h2$. Comme on l'a déjà indiqué, il n'est pas nécessaire dans ce deuxième mode de réalisation que $f$ soit une fonction de hachage à sens unique, un simple OU EXCLUSIF étant par exemple suffisant.

**Application de l'invention à une signature numérique selon GUILLOU-QUISQUATER**

Le procédé de signature présenté par GUILLOU et QUISQUATER à la conférence CRYPTO 88 est basé sur la difficulté de factoriser des grands entiers. Dans la version dite « basée sur l'identité » il est prévu une autorité de confiance pour calculer les clés secrètes $s$ des utilisateurs. Les paramètres universels sont :

- un grand nombre entier $n$ non premier (c'est-à-dire un nombre divisible) dont les facteurs premiers sont connus uniquement de l'autorité de confiance, et d'une longueur minimale recommandée de 512 bits,
- un nombre entier premier $u$ d'une longueur minimale recommandée de 72 bits,
- une fonction $t$, typiquement la fonction identité, une fonction à sens unique ou une fonction de troncature.

Ici, la clé publique $C$ du signataire est son «identité» $I$, $I$ étant par exemple une chaîne binaire contenant des informations sur le signataire. La clé secrète $s$ est une valeur telle que $s^u I = 1$ (modulo $n$) (c'est-à-dire : le reste de la division par $n$ de $s$ à la puissance u multiplié par $I$ est égal à 1).

## Application du premier mode de réalisation de l'invention

Le tableau 3 ci-après décrit les opérations qui résultent de l'application du premier mode de réalisation de l'invention au modèle de G.Q. (GUILLOU-QUISQUATER) Dans ce tableau, la fonction réversible $Fc$ est la fonction OU EXCLUSIF ($\oplus$), et $x$ est une variable intermédiaire permettant de calculer le paramètre $c$ d'engagement de la valeur aléatoire $r$.

Au lieu de la fonction OU EXCLUSIF $\oplus$ (fonction $Fc$), une variante de réalisation consisterait à utiliser comme fonction réversible $Fc$ l'addition modulo $n$, soit :

**étape 35/variante 1** : calcul de $e' = e + g(M)$ (modulo $n$)
**étape 35/variante 2** : calcul de $y' = y + g(M)$ (modulo $n$)
**étape 55/variante 1** : calcul de $e = e' - g(M)$ (modulo $n$),
**étape 55/variante 2** : calcul de $y = y' - g(M)$ (modulo $n$).

## Application du deuxième mode de réalisation de l'invention

Le tableau 4 ci-après décrit l'application du deuxième mode de réalisation de l'invention au modèle de G.Q..
On rappelle que la fonction $Fc$ peut être l'addition modulo $n$ au lieu de la fonction $\oplus$. Dans ce cas :

**étape 35/variante 1** : calcul de $e' = e + h2$ (modulo $n$)
**étape 35/variante 2** : calcul de $y' = y + h2$ (modulo $n$)
**étape 55/variante 1** : calcul de $e = e' - h2$ (modulo $n$),
**étape 55/variante 2** : calcul de $y = y' - h2$ (modulo $n$).

Egalement, il n'est pas nécessaire dans ce deuxième mode de réalisation que $f$ soit une fonction de hachage à sens unique.

Dans ce qui précède, on a décrit à titre d'exemple deux modes de réalisation de la présente invention et deux exemples d'application de chacun des modes de réalisations. Il apparaîtra clairement à l'homme du métier que la présente invention n'est pas limitée ces modes de réalisations ni aux exemples d'applications qui ont été donnés. De façon générale, la présente invention est en effet applicable à tout procédé de signature numérique dont la définition générale a été donnée au préambule en relation avec la figure 2, et notamment au procédé de signature décrit dans la demande de brevet français N° 94 01271 au nom de la demanderesse (FR-A-2 716 058).

On trouvera ci-après les tableaux 1 à 4 qui font partie intégrante de la description.

Tableau 1

| étapes | sous-étapes | opérations réalisées par le signataire | |
|---|---|---|---|
| **étape 5** | | calcul de $g(M)$ | |
| **étape 10** | **10.1** | choix de $r$ dans $\{1..q\}$ | |
| | **10.2** | calcul d'une valeur $x = B^r$ (modulo $p$) | |
| | **10.3** | calcul d'un engagement $c = t(x)$ | |
| **étape 20** | | calcul de $e = f(c,M)$ | |
| **étape 30** | | calcul de $y = r + s\,e$ (modulo $q$). | |
| | | **variante 1** | **variante 2** |
| **étape 35** | | calcul de $e' = e \oplus g(M)$ | calcul de $y' = y \oplus g(M)$ |

Tableau 1   (suite)

| étapes | sous-étapes | opérations réalisées par le signataire | |
|---|---|---|---|
| | | **variante 1** | **variante 2** |
| **étape 40** | | envoi de $M$ et de $S = (e',y)$ | envoi de $M$ et de $S = (e,y')$ |
| | | **opérations réalisées par le vérificateur** | |
| **étape 50** | | réception du message $M$ et de la signature $S$ | |
| **étape 51** | | calcul de $g(M)$ | |
| | | **variante 1** | **variante 2** |
| **étape 55** | | calcul de $e = e' \oplus g(M)$ | calcul de $y = y' \oplus g(M)$ |
| **étape 60** | | vérification : $e$ reçu est-il égal à $f(t(B^y\, C^e \text{ (modulo } p)),M)$ ? | |

Tableau 2

| étapes | sous-étapes | opérations réalisées par le signataire | |
|---|---|---|---|
| **étape 5** | **5.1** | calcul d'un paramètre condensé $h(M)$ du message $M$ | |
| | **5.2** | fractionnement de $h(M)$ en $h1$, $h2$, tels que $h(M) = h1\|\|h2$ | |
| **étape 10** | **10.1** | choix de $r$ dans $\{1..q\}$ | |
| | **10.2** | calcul de $x = B^r (\text{modulo } p)$ | |
| | **10.3** | calcul d'un engagement $c = t(x)$ | |
| **étape 20** | | calcul de $e = f(c,h1)$ | |
| **étape 30** | | calcul de $y = r + s\, e$ (modulo $q$). | |
| | | **variante 1** | **variante 2** |
| **étape 35** | | calcul de $e' = e \oplus h2$ | calcul de $y' = y \oplus h2$ |
| **étape 40** | | envoi de $M$ et de $S = (e',y)$ | envoi de $M$ et de $S = (e,y')$ |
| | | **opérations réalisées par le vérificateur** | |
| **étape 50** | | réception du message $M$ et de la signature $S$ | |
| **étape 51** | **51.1** | calcul du paramètre condensé $h(M)$ du message $M$ | |
| | **51.2** | fractionnement de $h(M)$ en $h1$, $h2$, tels que $h(M) = h1\|\|h2$ | |
| | | **variante 1** | **variante 2** |
| **étape 55** | | calcul de $e = e' \oplus h2$ | calcul de $y = y' \oplus h2$ |
| **étape 60** | | vérification : $e$ reçu est-il égal à $f(t(B^y\, C^e \text{ (modulo } p)),h1)$ ? | |

Tableau 3

| étapes | sous-étapes | opérations réalisées par le signataire |
|---|---|---|
| **étape 5** | | calcul de $g(M)$ |

Tableau 3   (suite)

| étapes | sous-étapes | opérations réalisées par le signataire | |
|---|---|---|---|
| étape 10 | 10.1 | choix de $r$ dans $\{1..n\}$ | |
| | 10.2 | calcul de $x = r^u$<br>(modulo $n$) | |
| | 10.3 | calcul d'un engagement $c = t(x)$ | |
| étape 20 | | calcul de $e = f(c,M)$ | |
| étape 30 | | calcul de $y = r\,s^e$ (modulo $n$). | |
| | | **variante 1** | **variante 2** |
| étape 35 | | calcul de<br>$e' = e \oplus g(M)$ | calcul de<br>$y' = y \oplus g(M)$ |
| étape 40 | | envoi de $M$ et de<br>$S = (e',y)$ | envoi de $M$ et de<br>$S = (e,y')$ |
| | | **opérations réalisées par le vérificateur** | |
| étape 50 | | réception du message $M$ et de la signature $S$ | |
| étape 51 | | calcul de $g(M)$ | |
| | | **variante 1** | **variante 2** |
| étape 55 | | calcul de<br>$e = e' \oplus g(M)$ | calcul de<br>$y = y' \oplus g(M)$ |
| étape 60 | | vérification : $e$ reçu est-il égal à<br>$f(t(y^u\,C^e$ (modulo $n$)),$M$) ? | |

Tableau 4

| étapes | sous-étapes | opérations réalisées par le signataire | |
|---|---|---|---|
| étape 5 | 5.1 | calcul d'un paramètre condensé $h(M)$ du message $M$ | |
| | 5.2 | fractionnement de $h(M)$ en $h1, h2$, tels que<br>$h(M) = h1\|\|h2$ | |
| étape 10 | 10.1 | choix de $r$ dans $\{1..n\}$ | |
| | 10.2 | calcul de $x = r^u$(modulo $n$) | |
| | 10.3 | calcul d'un engagement $c = t(x)$ | |
| étape 20 | | calcul de $e = f(c,h1)$ | |
| étape 30 | | calcul de $y = r\,s^e$ (modulo $n$). | |
| | | **variante 1** | **variante 2** |
| étape 35 | | calcul de $e' = e \oplus h2$ | calcul de $y' = y \oplus h2$ |
| étape 40 | | envoi de $M$ et de<br>$S = (e',y)$ | envoi de $M$ et de<br>$S = (e,y')$ |
| | | **opérations réalisées par le vérificateur** | |
| étape 50 | | réception du message $M$ et de la signature $S$ | |
| étape 51 | 51.1 | calcul du paramètre condensé $h(M)$ du message ($M$) | |
| | 51.2 | fractionnement de $h(M)$ en $h1, h2$, tels que<br>$h(M) = h1\|\|h2$ | |
| | | **variante 1** | **variante 2** |

Tableau 4   (suite)

| étapes | sous-étapes | opérations réalisées par le signataire | |
|---|---|---|---|
| **étape 55** | | calcul de $e = e' \oplus h2$ | calcul de $y = y' \oplus h2$ |
| **étape 60** | | vérification : $e$ reçu est-il égal à $f(t(y^u\, C^e\, (\text{modulo } n)), h1)$ ? | |

## Revendications

1. Procédé pour élaborer une signature numérique ($S$) résistant aux collisions, ladite signature ($S$) étant destinée à accompagner un message ($M$) à signer, comprenant des étapes (10, 20, 30) d'élaboration d'un premier ($e$) et d'un deuxième ($y$) paramètres de signature ($S$), caractérisé en ce qu'il comprend en outre :

   - une étape (5) d'élaboration d'un troisième paramètre ($g(M)$, $h2$) dépendant du message (M) à signer, et
   - une étape (35) de transformation d'au moins l'un desdits premier et deuxième paramètres ($e$, $y$) de signature ($S$) en un nouveau paramètre ($e'$,$y'$) de signature, consistant à combiner, au moyen d'une fonction réversible (Fc), le paramètre ($e$, $y$) à transformer et ledit troisième paramètre ($g(M)$, $h2$).

2. Procédé selon la revendication 1, caractérisé en ce que ledit troisième paramètre ($g(M)$, $h2$) est choisi de longueur inférieure ou de même longueur que le premier ($e$) ou second ($y$) paramètre avec lequel il est combiné.

3. Procédé selon l'une des revendications 1 ou 2, caractérisé en ce que :

   - ledit premier paramètre ($e$) est un code de hachage ($f(c,M)$) délivré par une première fonction de hachage à sens unique ($f$) recevant en entrée une valeur ($c$) d'engagement d'une valeur ($r$) aléatoire et le message ($M$) à signer,
   - ledit deuxième paramètre ($y$) est déterminé à partir du premier paramètre ($e$), d'une clé secrète ($s$) et de ladite valeur ($r$) aléatoire,
   - ledit troisième paramètre est un code de hachage ($g(M)$) délivré par une deuxième fonction de hachage ($g$) à sens unique recevant en entrée le message ($M$) à signer.

4. Procédé selon la revendication 3, caractérisé en ce que ladite étape (35) de transformation consiste à combiner ledit premier ($e$) et ledit deuxième ($y$) paramètres de signature respectivement avec une première (g1) et une deuxième (g2) fraction dudit troisième paramètre (g(M)).

5. Procédé selon la revendication 3, caractérisé en ce que ladite étape (35) de transformation consiste à combiner l'un desdits premier ($e$) et deuxième ($y$) paramètres de signature avec ledit troisième paramètre (g(M)).

6. Procédé selon l'une des revendications 3 à 5, caractérisé en ce que lesdites première ($f$) et deuxième ($g$) fonctions de hachage sont identiques.

7. Procédé selon l'une des revendications 1 ou 2, caractérisé en ce que :

   - ledit premier paramètre ($e$) est délivré par une fonction ($f$) recevant en entrée une valeur ($c$) d'engagement d'une valeur ($r$) aléatoire et une fraction ($h1$) d'un code de hachage ($h(M)$) délivré par une fonction de hachage ($h$) résistant aux collisions recevant en entrée le message ($M$) à signer,
   - ledit deuxième paramètre ($y$) est déterminé à partir dudit premier paramètre ($e$), d'une clé secrète ($s$) et de ladite valeur ($r$) aléatoire,
   - ledit troisième paramètre ($h2$) est une autre fraction ($h2$) du code de hachage ($h(M)$) délivré par ladite fonction de hachage ($h$) résistant aux collisions recevant en entrée le message ($M$) à signer.

8. Procédé selon la revendication 7, caractérisé en ce que la fonction ($f$) délivrant ledit premier paramètre ($e$) est une fonction de hachage ($f$) à sens unique.

9. Procédé selon la revendication 7, caractérisé en ce que la fonction ($f$) délivrant ledit premier paramètre ($e$) est la fonction OU EXCLUSIF calculée bit à bit.

10. Procédé selon l'une des revendications 1 à 9, caractérisé en ce que ladite fonction réversible (Fc) est la fonction logique OU EXCLUSIF calculée bit à bit.

11. Procédé selon l'une des revendications 1 à 10, caractérisé en ce que lesdites étapes (10, 20, 30) d'élaboration du premier (*e*) et du deuxième (*y*) paramètres de signature (*S*) sont réalisées selon le procédé de GUILLOU et QUISQUATER.

12. Procédé selon l'une des revendications 1 à 10, caractérisé en ce que lesdites étapes (10, 20, 30) d'élaboration du premier (*e*) et du deuxième (*y*) paramètres de signature (*S*) sont réalisées selon le procédé de SCHNORR.

13. Procédé de vérification de la validité d'une signature numérique (*S*) accompagnant un message (*M*), ladite signature (*S*) étant élaborée selon le procédé de l'une des revendications 1 à 12 et comprenant un premier (*e, e'*) et un deuxième (*y, y'*) paramètres de signature, caractérisé en ce qu'il comprend :

   - une étape (51) d'élaboration d'un troisième paramètre (*g(M), h2*) dépendant du message (M) à signer, et
   - une étape (55) de restauration d'au moins l'un desdits paramètres (*e', y'*) de signature (*S*), consistant à combiner au moyen de la fonction inverse ($Fc^{-1}$) d'une fonction réversible prédéterminée (*Fc*) le paramètre (*e', y'*) à restaurer et ledit troisième paramètre (*g(M), h2*).

## Patentansprüche

1. Verfahren zum Ausarbeiten einer numerischen Unterschrift (S) ohne Kollisionen, wobei die Unterschrift (S) dazu dient, einer zu unterschreibenden Nachricht (M) beigefügt zu werden, das die Schritte (10, 20, 30) der Ausarbeitung eines ersten (e) und eines zweiten (y) Parameters der Unterschrift (S) umfaßt, dadurch gekennzeichnet, daß es außerdem umfaßt:

   - einen Schritt (5) der Ausarbeitung eines dritten Parameters (g(M), h2) in Abhängigkeit von der zu unterschreibenden Nachricht (M), und
   - einen Schritt (35) der Transformation entweder des ersten oder zweiten Parameters (e, y) der Unterschrift (S) in einen neuen Parameter (e', y') der Unterschrift, indem mittels einer umkehrbaren Funktion (Fc) der zu transformierende Parameter (e, y) und der dritte Parameter (g(M), h2) kombiniert werden.

2. Verfahren nach Anspruch 1, dadurch gekennzeichnet, daß der dritte Parameter (g(M), h2) von niedrigerer Länge als oder gleicher Länge wie der erste (e) oder zweite (y) Parameter gewählt wird, mit dem er kombiniert wird.

3. Verfahren nach einem der Ansprüche 1 oder 2, dadurch gekennzeichnet, daß:

   - der erste Parameter (e) ein Hash-Code (f(c,M) ist, der durch eine erste Einweg-Hash-Funktion (f) aus einem Verschleierungswert (c) eines Zufallswertes (r) und der zu unterschreibenden Nachricht (M) als Eingangsgröße erzeugt wird,
   - wobei der zweite Parameter (y) ausgehend von dem ersten Parameter (e) aus einem Geheimschlüssel (s) und dem Zufallswert (r) festgelegt wird,
   - wobei der dritte Parameter ein Hash-Code (g(M) ist, der durch eine zweite Einweg-Hash-Funktion (g) mit der zu unterschreibenden Nachricht (M) als Eingang erzeugt wird.

4. Verfahren nach Anspruch 3, dadurch gekennzeichnet, daß der Schritt (35) der Transformation darin besteht, den ersten (e) und den zweiten (y) Parameter der Unterschrift jeweils mit einem ersten (g1) und einem zweiten (g2) Bruchteil des dritten Parameters (g(M)) zu kombinieren.

5. Verfahren nach Anspruch 3, dadurch gekennzeichnet, daß der Schritt (35) der Transformation darin besteht, den einen des ersten (e) und des zweiten (y) Parameters der Unterschrift mit dem dritten Parameter (g(M)) zu kombinieren.

6. Verfahren nach einem der Ansprüche 3 bis 5, dadurch gekennzeichnet, daß die erste (f) und zweite (g) Hash-Funktion identisch sind.

7. Verfahren nach einem der Ansprüche 1 oder 2, dadurch gekennzeichnet, daß:

- der erste Parameter (e) durch eine Funktion (f) mit einem Verschleierungswert (c) eines Zufallswertes (r) und eines Bruchteils (h1) eines Hash-Codes (h(M)), der durch eine Hash-Funktion (h) ohne Kollisionen aus der zu unterschreibenden Nachricht (M) als Eingangsgröße erzeugt wird, als Eingangsgröße erzeugt wird,
- wobei der zweite Parameter (y) ausgehend von dem ersten Parameter (e), einem Geheimschlüssel (s) und dem Zufaliswert (r) bestimmt wird,
- wobei der dritte Parameter (h2) ein anderer Bruchteil (h2) des Hash-Codes (h(M)) ist, der durch die Hash-Funktion (h) ohne Kollisionen aus der zu unterschreibenden Nachricht (M) als Eingangsgröße erzeugt wird.

8.  Verfahren nach Anspruch 7, dadurch gekennzeichnet, daß die Funktion (f) zur Ausgabe des ersten Parameters (e) eine Einweg-Hash-Funktion (f) ist.

9.  Verfahren nach Anspruch 7, dadurch gekennzeichnet, daß die Funktion (f) zur Ausgabe des ersten Parameters (e) die Bit für Bit berechnete EXKLUSIV-ODER-Funktion ist.

10. Verfahren nach einem der Ansprüche 1 bis 9, dadurch gekennzeichnet, daß die reversible Funktion (Fc) die Bit für Bit berechnete logische EXKLUSIV-ODER-Funktion ist.

11. Verfahren nach einem der Ansprüche 1 bis 10, dadurch gekennzeichnet, daß die Schritte (10, 20, 30) der Ausarbeitung des ersten (e) und des zweiten (y) Parameters der Unterschrift (S) nach den Verfahren nach Guillou und Quisquater durchgeführt werden.

12. Verfahren nach einem der Ansprüche 1 bis 10, dadurch gekennzeichnet, daß die Schritte (10, 20, 30) zur Ausarbeitung des ersten (e) und des zweiten (y) Parameters der Unterschrift (S) nach dem Verfahren von SCHNORR ablaufen.

13. Verfahren zur Verifizierung der Gültigkeit einer numerischen Unterschrift (S), die an einer Nachricht (M) angehängt ist, wobei die Unterschrift (S) nach dem Verfahren nach einem der Ansprüche 1 bis 12 erzeugt wurde und einen ersten (e, e') und einen zweiten (y, y') Unterschriftsparameter umfaßt, dadurch gekennzeichnet, daß es umfaßt:

    - einen Schritt (51) zur Ausarbeitung eines dritten Parameters (g(M), h2) in Abhängigkeit von der zu unterschreibenden Nachricht (M), und
    - einen Schritt (55) zur Wiederherstellung wenigstens eines der Parameter (e', y') der Unterschrift (S), der darin besteht, über eine Umkehrfunktion (Fc$^{-1}$) einer reversiblen, vorgegebenen Funktion (Fc) den wiederherzustellenden Parameter (e', y') und den dritten Parameter (g(M), h2) zu kombinieren.

## Claims

1.  A procedure for generating a collision-resistant digital signature (S), the said signature (S) being designed to accompany a message (M) to be signed, comprising stages (10, 20, 30) for generating first (e) and second (y) parameters of the signature (S), characterised in that it further comprises:

    - a stage (5) for generating a third parameter (g(M), h2) dependent on the message (M) to be signed, and
    - a stage (35) for the transformation of at least one of the first and second parameters (e, y) of the signature (S) into a new signature parameter (e',y'), consisting of combining, by means of a reversible function (Fc), the parameter (e, y) to be transformed and the said third parameter (g(M), h2).

2.  A procedure according to claim 1, characterised in that the said third parameter (g(M), h2) is chosen to be shorter than or of the same length as the first (e) or second (y) parameter with which it is combined.

3.  A procedure according to either of claims 1 or 2, characterised in that:

    - the said first parameter (e) is a hash code (f(c,M) ) given by a first one-way hash function (f) to which a commitment value (c) of a random value (r) and the message (M) to be signed are input,
    - the said second parameter (y) is determined from the first parameter (e) by a secret key (s) and the said random value (r),
    - the said third parameter is a hash code (g(M)) given by a second one-way hash function (g) to which the message (M) to be signed is input.

4. A procedure according to claim 3, characterised in that the said transformation stage (35) consists of combining the said first ($e$) and said second ($y$) signature parameters respectively with a first ($g1$) and a second ($g2$) fraction of the said third parameter ($g(M)$).

5. A procedure according to claim 3, characterised in that the said transformation stage (35) consists of combining one of the said first ($e$) and second ($y$) signature parameters with the said third parameter ($g(M)$).

6. A procedure according to any of claims 3 to 5, characterised in that the said first ($f$) and second ($g$) hash functions are identical.

7. A procedure according to either of claims 1 or 2, characterised in that:

   - the said parameter ($e$) is given by a function ($f$) to which are input a commitment value ($c$) of a random value ($r$) and a fraction ($h1$) of a hash code ($h(M)$) given by a collision-resistant hash function ($h$) to which the message ($M$) to be signed is input,
   - the said second parameter ($y$) is determined from the said first parameter ($e$), a secret code ($s$) and the said random value ($r$),
   - the said third parameter ($h2$) is another fraction ($h2$) of the hash code ($h(M)$) given by the said collision-resistant hash function ($h$) to which the message ($M$) to be signed is input.

8. A procedure according to claim 7, characterised in that the function ($f$) giving the said first parameter ($e$) is a one-way hash function ($f$).

9. A procedure according to claim 7, characterised in that the function ($f$) giving the said first parameter ($e$) is the EXCLUSIVE-OR function calculated bit by bit.

10. A procedure according to one of claims 1 to 9, characterised in that the said reversible function ($Fc$) is the EXCLUSIVE-OR logic function calculated bit by bit.

11. A procedure according to one of claims 1 to 10, characterised in that the said stages (10, 20, 30) generating the first ($e$) and second ($y$) parameters of the signature ($S$) are executed by the GUILLOU or QUISQUATER procedure.

12. A procedure according to one of claims 1 to 10, characterised in that the said stages (10, 20, 30) generating the first ($e$) and second ($y$) parameters of the signature ($S$) are executed by the SCHNORR procedure.

13. A procedure for checking the validity of a digital signature ($S$) accompanying a message ($M$), the said signature ($S$) being generated by the procedure of one of claims 1 to 12 and comprising first ($e$, $e'$) and second ($y$, $y'$) signature parameters, characterised in that it comprises:

   - a stage (51) for generating a third parameter ($g(M)$, $h2$) dependent on the message ($M$) to be signed, and
   - a stage (55) for restoring at least one of the said parameters ($e'$, $y'$) of the signature ($S$), consisting of combining, by means of the inverse function ($Fc^{-1}$) of a predetermined reversible function ($Fc$), the parameter ($e'$, $y'$) to be restored and the said third parameter ($g(M)$, $h2$).

FIG. 1

FIG. 2 (ART ANTERIEUR)

**SIGNATAIRE**

10-- | calcul d'une valeur d'engagement $c$ d'une valeur $r$ choisie au hasard |

20-- | calcul d'un premier paramètre de signature : $e = f(c,M)$ |

30-- | calcul d'un deuxième paramètre de signature : $y(s,r,e)$ |

40-- | envoi du message $M$ et de la signature $S = (e,y)$ |

**VERIFICATEUR**

50-- | réception du message $M$ et de la signature $S$ |

60-- | vérification de $S$ |

# FIG. 3

**SIGNATAIRE**

5-- | calcul de $g(M)$ |

10-- | calcul d'un engagement $c$ d'une valeur $r$ choisie au hasard |

20-- | calcul du premier paramètre $e = f(c,M)$ |

30-- | calcul du deuxième paramètre $y(s,r,e)$ |

| **VARIANTE 1** | **VARIANTE 2** |
|---|---|
| 35-- calcul de $e' = e\ Fc\ g(M)$ | calcul de $y' = y\ Fc\ g(M)$ |
| 40-- envoi de $M$ et de $S = (e',y)$ | envoi de $M$ et de $S = (e,y')$ |

**VERIFICATEUR**

50-- | réception du message $M$ et de la signature $S$ |

51-- | calcul de $g(M)$ |

| **VARIANTE 1** | **VARIANTE 2** |
|---|---|
| 55-- calcul de $e = e'\ Fc^{-1}\ g(M)$ | calcul de $y = y'\ Fc^{-1}\ g(M)$ |

60-- | vérification de $S$ |

FIG. 4

**SIGNATAIRE**

(5)  5.1-- | calcul d'un paramètre condensé $h(M)$ du message $M$

5.2-- | fractionnement de $h(M)$ en $h1$, $h2$ , tels que $h(M) = h1||h2$

10-- | calcul d'un engagement $c$ d'une valeur r choisie au hasard

20-- | calcul du premier paramètre $e = f(c,h1)$

30-- | calcul du deuxième paramètre $y$ $(s,r,e)$

| **VARIANTE 1** | **VARIANTE 2** |
|---|---|
| 35-- calcul de $e' = e\ Fc\ h2$ | calcul de $y' = y\ Fc\ h2$ |
| 40-- envoi de $M$ et de $S = (e',y)$ | envoi de $M$ et de $S = (e,y')$ |

**VERIFICATEUR**

50-- | réception du message $M$ et de la signature $S$

(51)  51.1-- | calcul du paramètre condensé $h(M)$ du message $M$

51.2-- | fractionnement de $h(M)$ en $h1$, $h2$ , tels que $h(M) = h1||h2$

| **VARIANTE 1** | **VARIANTE 2** |
|---|---|
| 55-- calcul de $e = e'\ Fc^{-1}\ h2$ | calcul de $y = y'\ Fc^{-1}\ h2$ |

60-- | vérification de $S$